# EUROPEAN PATENT SPECIFICATION

(11) **EP 0 889 796 B1**
(45) Date of publication and mention of the grant of the patent: **02.10.2002**
(21) Application number: 97908384.7
(22) Date of filing: 21.03.1997
(51) Int. Cl.: B60L 15/20, B60L 7/04, A63B 55/08

(54) **CONTROL ARRANGEMENT**
STEUEREUNGSVORRICHTUNG
DISPOSITIF DE COMMANDE

(30) Priority: 29.03.1996 GB 9606639
(43) Date of publication of application: 13.01.1999
(73) Proprietor: HANCOCK, Frank John Thompson, Alderley Edge, Cheshire SK9 7AT (GB)
(72) Inventor: HANCOCK, Frank John Thompson, Alderley Edge, Cheshire SK9 7AT (GB)
(74) Representative: McNeight, David Leslie
(86) International application number: GB9700778
(87) International publication number: WO97036763

(56) References cited:
- EP-A- 0 575 700
- GB-A- 2 285 852
- IEEE TRANSACTIONS ON INDUSTRY APPLICATIONS, vol. IA-14, no. 6, November 1978 - December 1978, NEW YORK US, pages 573-580, XP002034618 RONALD B. BAILEY ET AL.: "A modern chopper propulsion system for rapid transit application with high regeneration capability"
- PATENT ABSTRACTS OF JAPAN vol. 095, no. 008, 29 September 1995 & JP 07 123529 A (KUBOTA CORP), 12 May 1995, & DATABASE WPI Week 9528 Derwent Publications Ltd., London, GB; AN 95-211280 & JP 07 123 529 (KUBOTA CORP) , 12 May 1995
- PATENT ABSTRACTS OF JAPAN vol. 009, no. 242 (M-417), 28 September 1985 & JP 60 096102 A (NIPPON KOKUYU TETSUDO), 29 May 1985,

## Description

This invention relates to control arrangement particularly for trolleys, more particularly for two- or three-wheeled, motorised trolleys such as golf trolleys or caddies.

Numerous arrangements have been proposed, and some of them realised, for the control of motorised trolleys, by which is meant motorised vehicles which move at walking pace, controlled by a pedestrian. GB-A-2 285 852 describes a control arrangement for a trolley having a handle by which a driving motor is controlled, the handle having a transducer providing a control signal for the driving motor and having limited movement relative to the fore-and-aft direction, but being stiffly connected to the trolley in the vertical and lateral directions whereby the trolley can be manually controlled by the handle in pitch and yaw, essentially to steer it and to control its attitude for example so as to elevate it from a tilted, parked position, in the case of a two-wheeled trolley.

The present invention provides control arrangements improved over those described in GB-A-2 285 852 which can be realised less expensively and which can be set up to maximise range through efficient power management.

The invention comprises a control arrangement for a trolley having a handle by which a driving motor is controlled, the handle working a transducer providing control signalling for said motor and having limited movement relative to the trolley in the fore and aft direction but being stiffly connected to the trolley in the vertical and lateral directions whereby the trolley can be manually controlled by the handle in pitch and yaw, in which the transducer comprises a switch biassed to one of two or three positions which on operation of the handle to move or push the trolley along actuates a controller to ramp up motor voltage in a predetermined fashion and when the switch returns under its bias to its position indicating lack of demand for further acceleration actuates the controller to ramp down the motor voltage.

The trolley may be arranged to be just pulled or just pushed, in which case a two-position switch having on and off states may be used. However the trolley may be arranged to be pulled or pushed at will in which case a three-position switch arrangement biassed to the centre position could be used. Such three position switch arrangement could be constituted by two opposed micro switches.

The operation of the switch with the trolley at rest may first remove a motor shunt, and may be arranged to produce an initial steep ramp adapted to overcome drive train friction - this can prevent any perceivable delay in starting off from rest.

The initial steep ramp may continue up to a threshold voltage at which a less steep ramp is effected by continued demand for acceleration. Ramping up and down may be effected at different rates - ramping down may be effected at a faster rate than ramping up (except if appropriate, for ramping up at an initial steep rate).

After ramping down a motor shunt may be progressively brought into play to effect motor braking. On actuation of the switch to ramp up motor voltage any motor shunt applied may be immediately removed.

A pre-set run control may be provided operable to ramp the motor voltage up to a predetermined value for a predetermined time. More than one predetermined time may be available. The arrangement may comprise a push-button type actuator independent of the handle switch to control the feature; one depression of the actuator might give a run-on time of, say, ten seconds, a second depression within, say, one second, could give a run-on time of. say, twenty seconds. Such a pre-set run control may be arranged to be operable only when the motor voltage is not otherwise being ramped up.

A cruise control arrangement may be provided in which the instantaneous voltage applied to the motor can be maintained indefinitely. The cruise control may be arranged to be operative only when the motor voltage is being ramped up, thus when the trolley is accelerating under the control of the handle switch and has been thought to have attained a desired speed, the operating mode may be shifted into cruise so that the motor no longer responds to the handle switch. Again, a push-button type actuator may be used to select cruise mode. and, since cruise mode cannot be selected at the same time as pre-set run mode. the same push-button type actuator may be used for both controls, also to cancel cruise mode.

The control arrangement may comprise a microprocessor. The pre-determined settings. e.g. of ramp rates, threshold voltage, pre-set run voltage and cruise speed, may be held in ROM having been specifically chosen to optimise performance of a particular trolley, or may be held in EEPROM with facility to change them, or some of them, according to user preference.

More sophisticated motor and braking control arrangements for heavier vehicles - electrically driven railcars and trucks - are described in "A Modem Chopper Propulsion System for Rapid Transit Application with High Regeneration Capacity", Ronald B Bailey, Dennis F Williamson and Thomas D Stitt, IEFE Transactions on Industry Applications, Vol IA-14, No 6, November 1978 - December 1978, New York, US, pages 573-580, XP002034618, and in EP 0575700 A1 and Patent Abstracts of Japan, Vol 095 No 068, 29 September 1995. JP 07 123529 (Kubota Corp.), 12 May 1995, discloses a small electric vehicle such as a golf trolley has an electric drive with a constant speed control to avoid having to grip the steering handle continuously.

Motor current can, of course, be monitored for protection from short circuit or to switch off in case of out-of-limits operation - a collision, for example. A current limiting arrangement can be provided preventing too-rapid acceleration or limiting uphill speed to improve the efficiency of the battery discharge cycle and to limit motor operation to its maximum efficiency range.

The microprocessor can also monitor battery level and indicate charge remaining.

The invention also comprises a trolley comprising a control arrangement as referred to above. With the motor braking feature, the motor may drive a fixed wheel arrangement; if a pair of fixed wheels is driven a differential may be used.

Embodiments of a control arrangement and a trolley according to the invention will now be described with reference to the accompanying drawings, in which:-
- Figure 1: is a side elevation of a motorised golf trolley;
- Figure 2: is a cross-section through one embodiment of handle of the trolley of Figure 1;
- Figure 3: is a cross-section through a second embodiment of handle of the trolley of Figure 1;
- Figure 4: is a diagrammatic illustration of a control circuit; and
- Figure 5: is a set of graphs showing motor voltage against time in various operating modes.

The drawings illustrate a control arrangement for a golf trolley 11. The trolley has a frame 12 with accommodation for a golf bag 13 and runs on wheels 14 on an axle 15 which comprises two half shafts with a differential. A foot 16 allows the trolley 11 to stand up when not in motion. An electric motor 17 drives the wheels which in this case are fixed wheels. i.e. without free wheel gear. A batten 18 powers the motor 17 under the control of the control arrangement 19. Instead of the foot 16, which normally requires the trolley to be tilted for movement, a third (free) wheel can be provided, or the third wheel can be driven by the motor while the other two coaxial wheels are free running.

The trolley 11 has a handle 21 by which the motor 17 is controlled. The handle 21 works a transducer 22 providing control signalling for the motor 17 and having limited movement relative to the trolley 11 in the fore and aft direction, arrow 23, but is stiffly connected to the trolley in the vertical and lateral directions 24, 25.

When the handle 21 is pulled in the usual fashion for pulling along an unmotorised trolley, the transducer 22 provides control signalling for the motor 17 which drives the wheels 14 reducing or eliminating the pulling force required to move the trolley 11. Pitch and yaw control remains exactly as it is with unmotorised trolleys, the handle 21 being, for these movements, the equivalent of the conventional unmotorised trolley handle.

The handle 21 can, of course, simply be added on to or substituted for the existing handles of conventionally motorised trolleys to retrofit the control arrangement of the present invention.

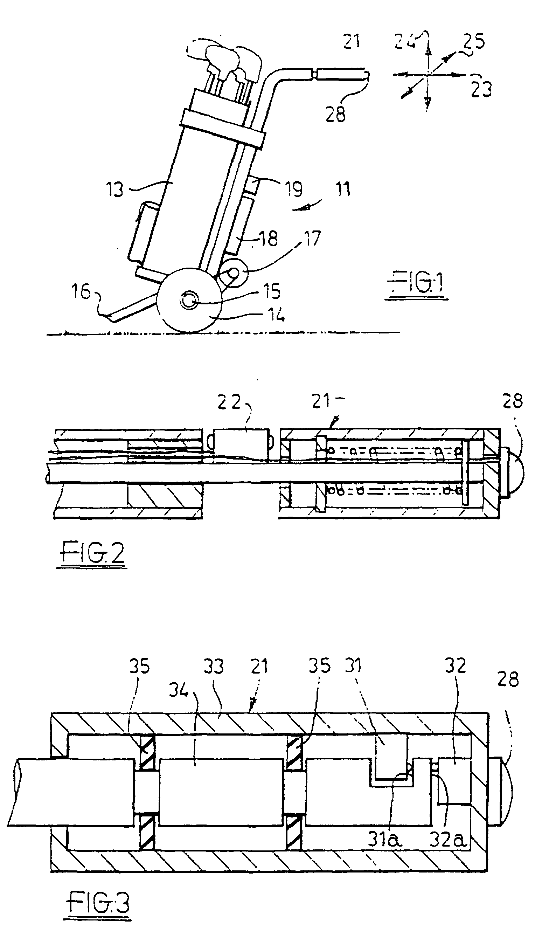

The transducer 22, in the handle illustrated in Figure 2, comprises a microswitch biassed to one of two (on/off) positions which on operation of the handle 21 to pull the trolley 11 along actuates the controller 19 to ramp up motor voltage in a predetermined fashion and when the micro switch returns under its bias to its position indicating lack of demand for further acceleration actuates the controller to hold the motor voltage for a predetermined time, then unless there is further demand, to ramp it down.

The "predetermined fashion" and "predetermined time referred to depend on the circumstances.

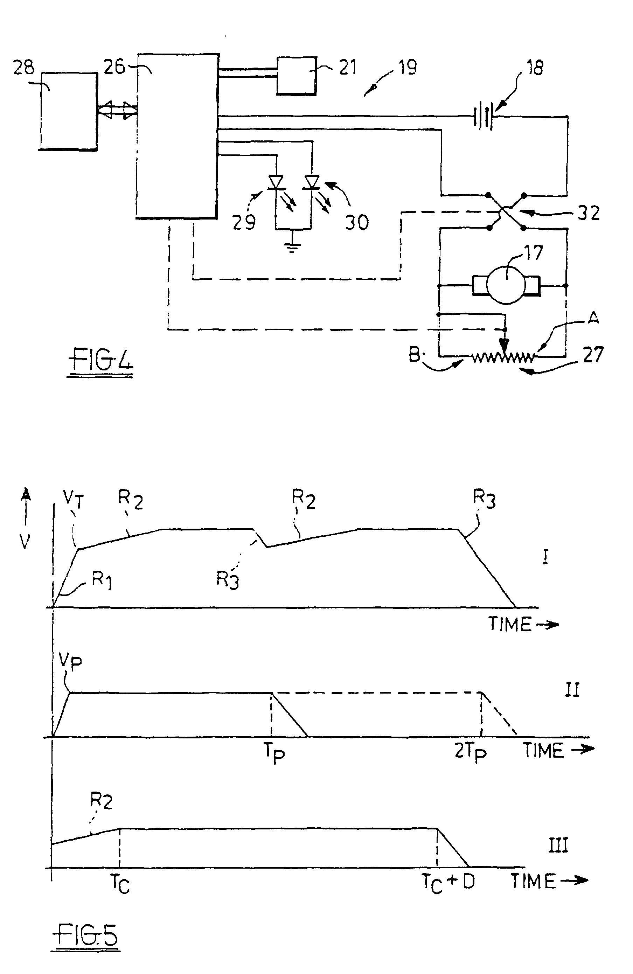

If the trolley 11 is at rest, operation of the micro switch 22 first removes a motor shunt - as seen in Figure 4. a rheostat 27 is connected across the motor 17 terminals and at rest the motor is shunted out with the slider at end "A". To remove the shunt, the slider is moved to end "B". (Of course, this can perhaps better be implemented with solid state switching in practice).

The initial ramp from rest is very steep as seen at R1 on Figure 5, graph I. This is adapted to overcome drive train friction and reduce or eliminate any apparent delay between pulling on the handle and the trolley starting forward.

This steep ramp - the slope of which can, of course, be selected at an appropriate value by trial on different types and weights of trolley - continues up to a threshold voltage V_{T} at which a less steep ramp R2 is effected by continued demand for acceleration.

When the trolley 11 has accelerated to walking speed the pull on the handle 21 relaxes and the micro switch 22 returns under its bias. This maintains the voltage at the instantaneous level for a pre set time and then ramps the voltage down with a slope R3 steeper than R2. In prolonged walking, the slight slowing down of the trolley 11 will cause the micro switch 22 again to actuate the ramping up and down in cycles as shown in graph I of Figure 5. Appropriate selection of ramping rates and the hold level time, depending on the type and weight of the trolley can reduce or eliminate "hunting" here.

Figure 3 illustrates a handle in which two opposed micro switches 31, 32 are used in a handle which effects appropriately directioned motor drive according as pulling or pushing the trolley is intended. The micro switches are fixed to the handle outer shell 33 and bear against faces 31a, 32a of an armature 34 fixed to the trolley 11. The outer shell is supported on the armature 34 by rubber suspension collars 35. The arrangement (as also with the embodiment of Figure 2) is such that a light force in the appropriate direction will close the respective switch after slight movement, but that further force on the handle will not be taken by the switch mounting *per se* **but** rather by stiffness in the handle mounting or by abutment means.

After ramping down, the motor shunt can be progressively brought into play to effect motor braking - the use of motor braking implies, of course, the use of fixed rather than free wheels, hence the desirability of the differential in the drive train. Ramping down can be continued below zero volts so that enhanced motor braking can be used. The braking can be arranged to be regenerative so as to enhance range or time between battery charges.

If, of course, during a braking phase, the micro switch 22 is actuated to ramp up motor voltage again, indicating a demand for acceleration, the motor shunt is instantaneously removed.

The handle 21 has a second switch 28 which is a push-button type switch in the end of the handle 21. This can be operated independently of the switch 22 and has different operational modes depending on the circumstances in which it is operated.

If the switch 28 is operated when the motor voltage is not already being ramped up (e.g. from a standing start or during braking) it acts as a pre-set run control and it ramps the motor voltage up to a predetermined value Vₚ and holds it for a predetermined time Tₚ as shown in Figure 5, graph II. Two pushes on the button 28 can double this time - broken line trace in graph II.
If the button 28 is pressed when the motor voltage is, under the pull or push control, greater than zero (otherwise than by actuation of the button 28) it acts as a cruise control in which the instantaneous voltage applied to the motor 17 is maintained indefinitely. until cancelled by another press on the button 28. This is seen in graph III of Figure 5, where the button 28 is pressed during an R2 ramp at time T_{C} and again at T_{C}+D where D is the cruise duration.

The controller 19 is based on a microprocessor 26 with either ROM or EEPROM 28 to hold the various parameters determining the ramp rates and timings. The microprocessor 26 can also be arranged to monitor battery charge level to indicate the same in red and green led's 29,30, and motor current and to impose a limit on motor current and cut off the power in defined out-of-limits operating conditions. Reverse apparatus (i.e. both push or pull operations from a single switch as shown in Figure 3) is illustrated diagrammatically by a change over switch 32 in Figure 4 - in practice, again, solid state switching under the control of the microprocessor 26 would be preferentially used. but the change over switch illustrates the intention. Implementation in programming of the microprocessor 26, of course, can give different drive characteristics according as the trolley 1 is pushed or pulled, should this be desired.

## Claims

1. A control arrangement for a trolley (11) having a handle (81) by which a driving motor (17) is controlled, the handle working a transducer (22) providing control signalling for said motor (17) and having limited movement relative to the trolley (11) in the fore and aft direction but being stiffly connected to the trolley (11) in the vertical and lateral directions whereby the trolley (11) can be manually controlled by the handle (21) in pitch and yaw, in which the transducer (22) comprises a switched biassed to one of two (on/off) positions, **characterised in that** on operation of the handle to pull the trolley along the switch actuates a controller (19) to ramp up motor voltage in a predetermined fashion, and when the switch returns under its bias to its position indicating lack of demand for further acceleration, it actuates the controller (19) to ramp down the motor voltage.

2. A control arrangement according to claim 1, in which operation of the switch (22) with the trolley (11) at rest first removes a motor shunt (27).

3. A control arrangement according to claim 1 or claim 2, in which operation of the switch (22) with the trolley (11) at rest produces an initial steep ramp adapted to overcome drive train friction.

4. A control arrangement according to claim 2, in which the initial steep ramp continues up to a threshold voltage at which a less steep ramp is effected by continued demand for acceleration.

5. A control arrangement according to any one of claims 1 to 4, in which ramping up and down are effected at different rates.

6. A control arrangement according to claim 5, in which ramping down is effected at a faster rate than ramping up (except, if appropriate, for ramping up at an initial steep rate).

7. A control arrangement according to any one of claims 1 to 6, in which during ramping down a motor shunt (27) is progressively brought into play to effect motor braking.

8. A control arrangement according to claim 7, in which on actuation of the switch to ramp up motor voltage any motor shunt applied is immediately removed.

9. A control arrangement according to any one of claims 1 to 8, in which a pre-set run control is provided operable to ramp the motor voltage up to a predetermined value for a predetermined time.

10. A control arrangement according to claim 9, in which said pre-set run control is operable to maintain said predetermined value for more than one predetermined time.

11. A control arrangement according to claim 9 or claim 10, comprising a push-button type actuator (28) independent of the handle switch (22).

12. A control arrangement according to any one of claims 9 to 11, in which the pre-set run control is operable only when the motor voltage is not being otherwise ramped up.

13. A control arrangement according to any one of claims 1 to 12, comprising a cruise control arrangement in which the instantaneous voltage applied to the motor can be maintained indefinitely.

14. A control arrangement according to claim 13, in which the cruise control arrangement is operative only when the motor voltage is being ramped up.

15. A control arrangement according to claim 12 or claim 13, comprising a push-button type actuator independent of the handle switch.

16. A control arrangement according to claim 15, in which the push-button type actuator is the actuator (28) referred to in claim 11.

17. A control arrangement according to any one of claims 1 to 16, comprising a microprocessor (26).

18. A control arrangement according to claim 17, in which pre-determined settings are held in ROM.

19. A control arrangement according to claim 18, in which the ROM comprises EEPROM.

20. A trolley comprising a control arrangement according to any one of claims 1 to 19.

21. A trolley according to claim 20, in which the motor drives a fixed wheel arrangement.

22. A trolley according to claim 21. in which the trolley drives a pair of fixed wheels via a differential.

## Patentansprüche

1. Steuervorrichtung für einen Transportwagen (11) mit einem Handgriff (81), durch welchen ein Antriebsmotor (17) gesteuert wird, wobei der Handgriff einen Wandler (22) betätigt, der Steuersignale für den Motor (17) liefert und eine begrenzte Bewegung relativ zu dem Transportwagen (11) in Vorwärts- und Rückwärtsrichtung hat, aber in der vertikalen und seitlichen Richtung fest mit dem Transportwagen (11) verbunden ist, wodurch eine manuelle Nick- und Giersteuerung des Transportwagens (11) durch den Handgriff (21) durchgeführt werden kann, wobei der Wandler (22) einen Schalter aufweist, der in eine von zwei (ein/aus) Positionen vorgespannt ist, **dadurch gekennzeichnet, dass** bei Betätigung des Handgriffs, um den Transportwagen zu ziehen, der Schalter ein Steuergerät (19) betätigt, um die Motorspannung in einer vorbestimmten Weise rampenförmig ansteigen zu lassen, und wenn der Schalter unter seiner Vorspannung in seine Position zurückgekehrt wird, was einen Mangel des Verlangens nach weiterer Beschleunigung anzeigt, betätigt er das Steuergerät (19), um die Steuerspannung rampenförmig abzusenken.

2. Steuervorrichtung nach Anspruch 1, bei welcher die Betätigung des Schalters (22) bei dem Transportwagen (11) im Ruhezustand zuerst einen Motor-Nebenwiderstand (27) entfernt.

3. Steuervorrichtung nach Anspruch 1 oder Anspruch 2, bei welcher die Betätigung des Schalters (22) mit dem Transportwagen (11) im Ruhezustand eine anfänglich steile Rampe erzeugt, die zur Überwindung der Antriebszug-Reibung geeignet ist.

4. Steuervorrichtung nach Anspruch 2, bei der sich die anfängliche steile Rampe bis zu einer Schwellenspannung fortsetzt, an der eine weniger steile Rampe durch kontinuierliches Verlangen nach Beschleunigung bewirkt wird.

5. Steuervorrichtung nach einem der Ansprüche 1 bis 4, bei der die Aufwärts- und Abwärtsrampe mit unterschiedlichen Geschwindigkeiten bewirkt werden.

6. Steuervorrichtung nach Anspruch 5, bei der die Abwärtsrampe mit einer größeren Geschwindigkeit als die Aufwärtsrampe bewirkt wird (mit der Ausnahme, wenn dies zweckmäßig ist, der Aufwärtsrampe bei einer anfänglichen steilen Geschwindigkeit).

7. Steuervorrichtung nach einem der Ansprüche 1 bis 6, bei der während der Abwärtsrampe ein Motor-Nebenwiderstand (27) zunehmend ins Spiel gebracht wird, um eine Motorbremsung zu bewirken.

8. Steuervorrichtung nach Anspruch 7, bei der bei Betätigung des Schalters, um die Motorspannung rampenförmig ansteigen zu lassen, jeglicher zugeschaltete Motor-Nebenwiderstand unverzüglich entfernt wird.

9. Steuervorrichtung nach einem der Ansprüche 1 bis 8, bei der eine voreingestellte Ablaufsteuerung vorgesehen ist, welche betätigbar ist, um die Motorspannung rampenförmig bis zu einem vorbestimmten Wert während einer vorbestimmten Zeit ansteigen zu lassen.

10. Steuervorrichtung nach Anspruch 9, bei der die voreingestellte Ablaufsteuerung betätigbar ist, um den vorbestimmten Wert während mehr als einer vorbestimmten Zeit aufrechtzuerhalten.

11. Steuervorrichtung nach Anspruch 9 oder Anspruch 10, die ein Betätigungsglied (28) vom Drucktastentyp unabhängig von dem Handgriffschalter (22) aufweist.

12. Steuervorrichtung nach einem der Ansprüche 9 bis 11, bei welcher die voreingestellte Ablaufsteuerung nur betätigbar ist, wenn die Motorspannung nicht in anderer Weise rampenförmig ansteigt.

13. Steuervorrichtung nach einem der Ansprüche 1 bis 12, die eine Fahrtsteuervorrichtung aufweist, bei der die an den Motor angelegte augenblickliche Spannung unbestimmt aufrechterhalten werden kann.

14. Steuervorrichtung nach Anspruch 13, bei der die Fahrtsteuervorrichtung nur tätig ist, wenn die Motorspannung rampenförmig ansteigt.

15. Steuervorrichtung nach Anspruch 12 oder Anspruch 13, welche ein Betätigungsglied vom Drucktastentyp unabhängig von dem Handgriffschalter aufweist.

16. Steuervorrichtung nach Anspruch 15, bei der das Betätigungsglied vom Drucktastentyp das Betätigungsglied (28) ist, auf das in Anspruch 11 Bezug genommen ist.

17. Steuervorrichtung nach einem der Ansprüche 1 bis 16, die einen Mikroprozessor (26) aufweist.

18. Steuervorrichtung nach Anspruch 17, bei der vorbestimmte Einstellungen in einem ROM gehalten werden.

19. Steuervorrichtung nach Anspruch 18, bei der der ROM einen EEPROM aufweist.

20. Ein Transportwagen mit einer Steuervorrichtung gemäß einem der Ansprüche 1 bis 19.

21. Ein Transportwagen nach Anspruch 20, bei dem der Motor eine feste Radanordnung antreibt.

22. Ein Transportwagen nach Anspruch 21, bei dem der Transportwagen ein Paar von festen Rädern über ein Differential antreibt.

## Revendications

1. Ensemble de commande destiné à un chariot (11) ayant une poignée (81) par laquelle un moteur (17) d'entraînement est commandé, la poignée faisant fonctionner un transducteur (22) qui assure la signalisation de commande pour le moteur (17), ayant un mouvement limité par rapport au chariot (11) dans la direction avant-arrière, mais étant raccordée rigidement au chariot (11) dans les directions verticale et latérale, si bien que le chariot (11) peut être commandé manuellement par la poignée (21) en tangage et en lacet, dans lequel le transducteur (22) comporte un interrupteur rappelé vers l'une de deux positions (marche-arrêt), **caractérisé en ce que**, lors de la manoeuvre de la poignée afin que le chariot soit tiré, l'interrupteur manoeuvre un organe de commande (19) qui provoque une augmentation progressive de la tension du moteur de façon prédéterminée et, lorsque l'interrupteur revient sous l'action de sa force de rappel à une position indiquant l'absence de demande d'accélération supplémentaire, il commande l'organe de manoeuvre (19) afin qu'il réduise progressivement la tension du moteur.

2. Ensemble de commande selon la revendication 1, dans lequel la manoeuvre de l'interrupteur (22) alors que le chariot (11) est au repos supprime d'abord un shunt (27) du moteur.

3. Ensemble de commande selon la revendication 1 ou 2, dans lequel la manoeuvre de l'interrupteur (22) alors que le chariot (11) est au repos produit une variation progressive initiale importante destinée à dépasser le frottement du train moteur.

4. Ensemble de commande selon la revendication 2, dans lequel la variation initiale importante se poursuit jusqu'à une tension de seuil à laquelle une variation progressive moins importante est assurée par poursuite de la demande d'accélération.

5. Ensemble de commande selon l'une quelconque des revendications 1 à 4, dans lequel les variations progressives ascendante et descendante sont réalisées à des vitesses différentes.

6. Ensemble de commande selon la revendication 5, dans lequel la variation progressive descendante est réalisée plus vite que la variation progressive ascendante (sauf le cas échéant pour la variation progressive ascendante à une vitesse initiale importante).

7. Ensemble de commande selon l'une quelconque des revendications 1 à 6, dans lequel, pendant la variation progressive descendante, un shunt (27) du moteur est progressivement mis en jeu pour assurer un freinage du moteur.

8. Ensemble de commande selon la revendication 7, dans lequel, lors de la manoeuvre de l'interrupteur pour que la tension du moteur augmente progressivement, un shunt éventuellement appliqué au moteur est supprimé immédiatement.

9. Ensemble de commande selon l'une quelconque des revendications 1 à 8, dans lequel une commande de fonctionnement préréglé est disposée afin qu'elle assure une variation progressive de la tension du moteur en direction ascendante jusqu'à une valeur prédéterminée pendant un temps prédéterminé.

10. Ensemble de commande selon la revendication 9, dans lequel la commande de fonctionnement préréglé est destinée à maintenir la valeur prédéterminée pendant plus d'un temps prédéterminé.

11. Ensemble de commande selon la revendication 9 ou 10, comprenant un organe de manoeuvre (28) du type à bouton-poussoir indépendant de l'interrupteur (22) de la poignée.

12. Ensemble de commande selon l'une quelconque des revendications 9 à 11, dans lequel la commande de fonctionnement préréglé peut être utilisée uniquement lorsque la tension du moteur ne subit pas une augmentation progressive par ailleurs.

13. Ensemble de commande selon l'une quelconque des revendications 1 à 12, comprenant un ensemble de commande de croisière tel que la tension instantanée appliquée au moteur peut être maintenue indéfiniment.

14. Ensemble de commande selon la revendication 13, dans lequel l'ensemble de commande de croisière fonctionne uniquement lorsque la tension du moteur subit une augmentation progressive.

15. Ensemble de commande selon la revendication 12 ou 13, comprenant un organe de manoeuvre du type à bouton-poussoir indépendant de l'interrupteur de la poignée.

16. Ensemble de commande selon la revendication 15, dans lequel l'organe de manoeuvre du type à bouton-poussoir est l'organe de manoeuvre (28) indiqué dans la revendication 11.

17. Ensemble de commande selon l'une quelconque des revendications 1 à 16, comprenant un microprocesseur (26).

18. Ensemble de commande selon la revendication 17, dans lequel des réglages prédéterminée sont conservés dans une mémoire morte ROM.

19. Ensemble de commande selon la revendication 18, dans lequel la mémoire morte ROM est une mémoire EEPROM.

20. Chariot comprenant un ensemble de commande selon l'une quelconque des revendications 1 à 19.

21. Chariot selon la revendication 20, dans lequel le moteur entraîne un ensemble à roues fixes.

22. Chariot selon la revendication 21, dans lequel le chariot entraîne une paire de roues fixes par l'intermédiaire d'un différentiel.
